# EUROPÄISCHE PATENTSCHRIFT

(11) **EP 1 036 945 B1**
(45) Veröffentlichungstag und Bekanntmachung des Hinweises auf die Patenterteilung: **10.12.2003**
(21) Anmeldenummer: 00104899.0
(22) Anmeldetag: 08.03.2000
(51) Int. Cl.: A47K 3/30, E05D 5/02, E05D 7/04, F16B 5/02, F16B 5/06

(54) **Bausatz mit einer Vorrichtung zur verstellbaren Befestigung von festen oder beweglichen Platten**
Construction kit with a device for adjustably attaching stationary or movable plates
Kit comprenant un dispositif pour la fixation réglable de panneaux fixes ou mobiles

(30) Priorität: 11.03.1999 DE 19910843
(43) Veröffentlichungstag der Anmeldung: 20.09.2000
(73) Patentinhaber: Joh. Sprinz GmbH & Co., D-88214 Ravensburg (DE)
(72) Erfinder: Fischbach, Joachim, 88214 Ravensburg (DE)
(74) Vertreter: Otten, Herbert

(56) Entgegenhaltungen:
- EP-A- 0 581 140
- WO-A-98/44233

## Beschreibung

### Stand der Technik

Die Erfindung betrifft einen Bausatz umfassend einen Träger, eine Platte und eine Vorrichtung zur verstellbaren Befestigung von festen oder beweglichen Platten, insbesondere für Naßzellen oder dergleichen, mit wenigstens einem an der Platte unverschiebbar gelagerten Beschlagselement zur Lagerung der Platte an dem Träger, nach dem Oberbegriff des Anspruchs 1.

Platten kommen bei Naßzellen in der Regel als Trennwände oder Türen zum Einsatz. Um die Platten ortsfest oder beweglich zu halten, werden mit der Wand, dem Boden oder der Decke verschraubte Winkel oder Rahmenelemente eingesetzt, an denen die Platten befestigbar sind. Aufgrund der Einbautoleranzen, die z. B. durch schief eingesetzte Duschtassen und Badewannen oder unexakt ausgeführte Bohrungen für die Befestigung der Haltewinkel oder Halterahmen verursacht sein können, ist es erforderlich, daß die Platten relativ zu den Beschlag- oder Rahmenteilen nachträglich ausgerichtet werden können, um exakte Dichtspalte oder Beweglichkeit zu gewährleisten.

Aus der deutschen Offenlegungsschrift DE 197 10 547 A1 ist eine Vorrichtung zur Befestigung von Bauteilen an Platten bekannt, die es erlaubt, die Platte nachträglich relativ zum Beschlagteil auszurichten. Die in der genannten Schrift beschriebene Vorrichtung besteht aus einem in der Platte gelagerten Haltekörper, der über eine Spannschraube mit einem auf der von der Platte abgewandten Seite des Haltewinkels gelagerten Tragelement verbunden ist. Die Platte kann relativ zum Beschlag dadurch verstellt werden, daß das Tragelement im Beschlag verdreht wird und hierdurch ein Versatz zwischen der Achse des Tragelements und der Achse des Haltekörpers erzeugt wird.

Derartige Vorrichtungen weisen den Nachteil auf, daß sie für die Montage von zwei Seiten her zugänglich sein müssen. Einerseits muß die Platte von der der Duschtasse oder der Wanne zugewandten Seite her zugänglich sein, um die Spannschraube festdrehen zu können. Andererseits muß die Platte bzw. deren Befestigung von der Außenseite her zugänglich sein, damit das Tragelement in seiner axialen Ausrichtung auf den Haltekörper verstellt werden kann. Diese Art der Konstruktion führt immer dann zu Schwierigkeiten, wenn die Vorrichtung beim Einbau nur von einer Seite her zugänglich ist. Insbesondere bei Beschlägen, bei denen die Abdeckkappe am Beschlag schon vor der Montage der Platte unlösbar angebracht ist, kann die bekannte Vorrichtung nicht zum Einsatz kommen, da ein nachträgliches Verstellen des Tragelements unmöglich ist. Das Problem tritt auch dann auf, wenn beispielsweise auf der einen Seite der Platte ein Einbaumöbel anschließt, das nicht verrückt werden kann.

Aus der EP 0 581 140 A1 ist ein Spannelement für Plattenmaterial, insbesondere für Glasplatten bekannt geworden. Die Verstellbarkeit der Glasplatten ist nur in geringem Umfang möglich, da entsprechende Mittel zur Justierung nicht vorgesehen sind.

Aus der WO 98/44233 ist ein Klemmbeschlag für die Befestigung von Glasscheiben bekann geworden, bei welchem eine Verstellbarkeit und Justierbarkeit des Beschlags gegenüber der Glasplatte bzw. der Halterung ebenfalls nicht vorgesehen ist.

### Vorteile der Erfindung

Aufgabe der Erfindung ist es daher, einen Bausatz umfassend einen Träger, eine Platte und eine Vorrichtung zur verstellbaren Befestigung von festen oder beweglichen Platten, insbesondere von Naßzellen oder dergleichen, vorzuschlagen, bei dem die Platte von einer Seite befestigt und verstellt werden kann.

Diese Aufgabe wird ausgehend von einem Bausatz der einleitend genannten Art durch die kennzeichnenden Merkmale des Anspruchs 1 gelöst.

Durch die in den Unteransprüchen genannten Maßnahmen sind vorteilhafte Ausführungen und Weiterbildungen der Erfindung möglich.

Dementsprechend wird ein erfindungsgemäßer Bausatz umfassend einen Träger, eine Platte und eine Vorrichtung zur verstellbaren Befestigung von festen oder beweglichen Platten, insbesondere für Naßzellen oder dergleichen, mit wenigstens einem an der Platte unverschiebbar gelagerten Beschlagselement zur Lagerung der Platte an dem Träger, dadurch gekennzeichnet, daß ein das Beschlagselement mit einem Gegenstück verbindendes Verbindungsmittel den Träger mit Spiel durchgreift, wobei das Gegenstück verschieblich gelagert ist, wobei das Verbindungsmittel mindestens ein endseitiges Gewinde besitzt, und wobei das Gegenstück oder das Verbindungsmittel verdrehgesichert ist.

Durch diese Vorrichtung kann die Platte von der dem Träger abgewandten Seite der Platte befestigt und verstellt werden. Selbstverständlich kann eine Platte an mehreren Stellen mit derartigen Vorrichtungen befestigt sein. Im Folgenden ist immer nur von einer Vorrichtung die Rede, um Wiederholungen zu vermeiden. Bevor das Verbindungsmittel das Beschlagselement und das Gegenstück und damit die Platte und den Träger miteinander verspannt, kann die Platte in ihrer Hauptebene relativ zum Träger verschoben werden, wobei der maximale Verschiebeweg durch das Spiel des Verbindungsmittels im Träger vorgegeben ist.

Vorteilhafterweise schließt das Beschlagselement auf der dem Träger abgewandten Seite der Platte im Wesentlichen bündig in einer Ebene mit der Oberfläche der Platte ab. Ein derartiger bündiger Abschluß des Beschlagselements mit der Platte erzeugt eine gute Optik, verringert die Verletzungsgefahr und erleichtert nicht zuletzt die Reinigung der Platte.

Denkbar ist, daß das Verbindungsmittel eine Distanzhülse durchgreift, die zwischen dem Beschlagselement und dem Träger liegt. Der Einsatz von Distanzhülsen erlaubt es, die Platten in ihrer Ausrichtung zum Träger auch in einer zur Hauptebene der Platten vertikalen Richtung zu verändern. Weiterhin kann durch den Einsatz von Distanzhülsen unabhängig von der Ausgestaltung des Trägers eine stets optimale Auflagefläche für die Platte gewährleistet werden.

Vorteilhafterweise besteht der Träger aus einer Stange und einem die Stange ummantelnden Außenrohr. Diese Ausführung erlaubt eine optimale Anpassung des Trägers an die an ihn gestellten Anforderungen. So kann die Stange aus einem Material gestaltet sein, das für die Aufnahme der Belastung, insbesondere der Scherkräfte, geeignet ist. Ein korrosionsbeständiges Außenrohr aus Kunststoff oder Aluminium schützt den Träger nicht nur optimal, sondern kann auch farblich mit geringem Aufwand an die Wünsche des Kunden angepaßt werden. Ebenso ist es mit der Konstruktion möglich, den Kundenwünschen nach im Querschnitt kreisringförmigen oder vieleckförmigen:Profilen zu entsprechen. Die Montage der Einheit Träger aus den Teilen Stange und Außenrohr ist einfach zu bewerkstelligen. Hierzu muß lediglich das Außenrohr über die Stange geschoben werden, auch das Einlegen und Abdecken des Gegenstücks ist ein Vorteil.

In einer besonderen Ausführungsform sind das Beschlagselement und das Verbindungsmittel einteilig ausgeführt. Die einteilige Ausführung von Beschlagselement und Verbindungsmittel führt zu einer Verringerung der Einzelteile und damit auch zu einer kürzeren Montagezeit.

Denkbar ist auch, daß das Beschlagselement vom Verbindungsmittel durchsetzt wird. In diesem Fall kann als Verbindungsmittel ein Normbauteil, beispielsweise eine Normschraube mit Senkkopf und Innensechskant, verwendet werden. Auf diese Weise ist die Baugruppe Beschlagselement/Verbindungsmittel besonders kostengünstig herzustellen.

Vorteilhafterweise weist das Beschlagselement auf seiner der Stange abgewandten Seite Eingriffsmittel für Drehwerkzeuge auf. Bei den Drehwerkzeugen kann es sich beispielsweise um Steckschlüssel oder sogenannte Stirnlochschlüssel handeln, die in eine Sechskantausnehmung bzw. mehrerer Bohrungen im Beschlagselement eingreifen. Diese Ausführungsformen mindern die Verletzungsgefahr, da es keine hervorstehenden Teile gibt. Weiterhin kann insbesondere mit dem Stirnlochschlüssel ein hohes Drehmoment zur Verspannung der Bauteile aufgebracht werden.

Vorzugsweise ist das Beschlagselement als Konuskopf ausgebildet, dem gegebenenfalls ein Polyamidring zugeordnet ist. Der Konuskopf bietet den Vorteil, daß er optimal an der Platte anliegt und sich der Druck somit gleichmäßig auf die Mantelfläche der Platte verteilt. Sollte zwischen Konuskopf und Platte eine Verbindung gewünscht sein, die Elastizität aufweist, dann ist das Einsetzen eines Polyamidrings, der zwischen den Mantelflächen des Beschlagselements und der Platte liegt, vorteilhaft.

In einer besonders vorteilhaften Ausführungsform ist das Gegenstück durch einen ringförmigen Körper aus einem elastischen Material in einer Ausnehmung der Stange zentriert. Eine derartige Lagerung des Gegenstücks durch einen ringförmigen Körper aus elastischem Material ermöglicht es, das Gegenstück zentriert zu lagern, so daß seine Lage festgelegt ist und das Verbindungsmittel ohne eine suchende Bewegung in es eingeschraubt werden kann. Der elastische ringförmige Körper wird wiederum in der Ausnehmung der Stange verschiebesicher gehalten. Wird das Verbindungsmittel zusammen mit dem Beschlagselement und der Platte und gegebenenfalls der Distanzhülse in seiner Lage zur Stange verschoben, dann kann auch das Gegenstück diese Bewegung mitmachen, indem es den ringförmigen Körper in Verschieberichtung gegen die Stange zusammendrückt. Sollte die Platte beispielsweise beschädigt sein und durch eine neue ersetzt werden müssen, dann wird das Gegenstück nach dem Abschrauben der Platte durch den ringförmigen Körper wieder in seine ursprüngliche Position gedrückt, so daß das Verbindungsmittel erneut ohne Suchbewegung eingeschraubt werden kann.

Denkbar ist auch, daß die die Stange durchsetzende Durchgangsbohrung und/oder die Ausnehmung für das Gegenstück im Querschnitt langlochförmig ist. Unter Umständen treten Einbausituationen auf, bei denen es gewünscht ist, daß die Platte relativ zum Träger nur in einer Richtung verschoben werden kann. Dies kann beispielsweise dann der Fall sein, wenn die horizontale Position der Platte durch einen exakt gearbeiteten, stabilen Träger vorgegeben ist und nur noch eine Verschiebbarkeit der Platte in vertikaler Richtung gewünscht ist, um beispielsweise den Abstand zwischen der Oberkante der Duschtasse und der Unterkante der Platte genau auf die Erfordernisse des gewählten Verfugungsmaterials anzupassen. Die im Querschnitt langlochförmige Ausgestaltung der die Stange durchsetzenden Durchgangsbohrung und/oder der Ausnehmung für das Gegenstück erlaubt dann nur eine Bewegung von Verbindungsmittel und Gegenstück in eine Richtung, so daß das im Beispiel genannte, exakt vorgegebene horizontale Maß der Platte nicht verloren gehen kann.

Eine weitere vorteilhafte Ausführungsform liegt vor, wenn die Distanzhülse unverschiebbar und unverdrehbar in einem Durchbruch des Außenrohrs gelagert ist. Durch die Lagerung der Distanzhülse wird eine gute Optik erreicht, da der Übergang vom Außenrohr zur Distanzhülse im Wesentlichen fugenlos verläuft. Weiterhin wird durch diese Lagerung eine Ausrichtung der Distanzhülse auf die die Stange durchsetzende Durchgangsbohrung bzw. das Gegenstück erreicht. Somit ist der Weg für das Verbindungsmittel zur Erfassung des Gegenstücks schon durch die Distanzhülse vorgegeben.

In einer besonders vorteilhaften Ausführungsform ist die Distanzhülse in der Stange gelagert. Eine derartige Lagerung der Distanzhülse bietet einen optimalen Kraftverlauf von der Platte über die Distanzhülse in die Stange, da sich die Distanzhülse an der Stange, die das tragende Bauteil ist, formschlüssig abstützt.

### Zeichnung

Ein vorteilhaftes Ausführungsbeispiel der Erfindung ist in der Zeichnung dargestellt und in der nachfolgenden Beschreibung näher erläutert.

Im Einzelnen zeigen
- Fig. 1: eine teilweise geschnittene Seitenansicht eines Trägers mit einer daran befestigten Platte,
- Fig. 2: einen Schnitt durch Fig. 1 entlang der Mittellinie des Verbindungsmittels,
- Fig. 3: eine Draufsicht auf den Träger im Bereich der Ausnehmung für die Distanzhülse.

### Beschreibung der Erfindung

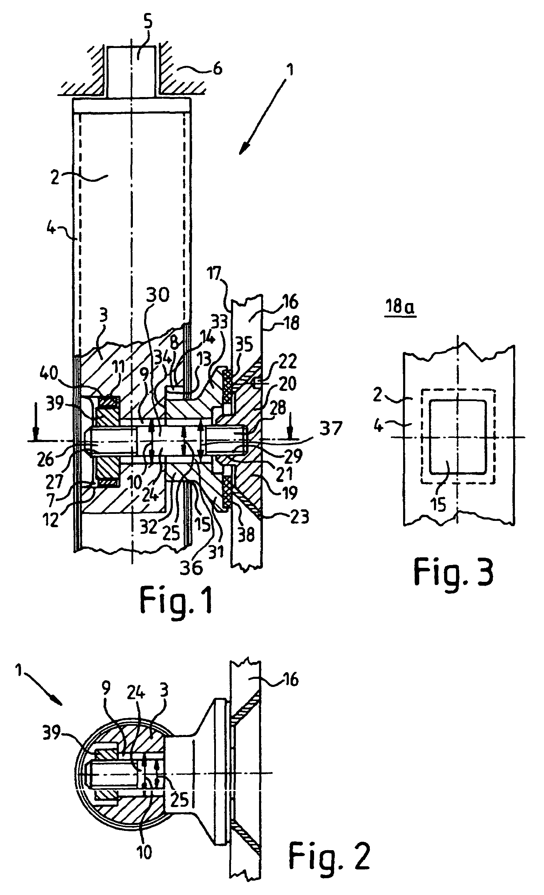

In der Darstellung gemäß Fig. 1 ist ein erfindungsgemäßer Bausatz mit der Vorrichtung 1 zur verstellbaren Befestigung von festen oder beweglichen Platten veranschaulicht. Die Vorrichtung 1 umfaßt einen Träger 2 mit einer Stange 3 im Innern eines Außenrohrs 4. Der Träger 2 weist eine Nase 5 auf, mit der er in einer nicht näher dargestellten Aufnahme 6 drehbar oder fest gelagert ist. Bei dem Träger 2 kann es sich beispielsweise um einen drehbar gelagerten Holm handeln, der senkrecht auf dem Rand einer Duschtasse montiert ist, sich in der Aufnahme 6 drehen kann und somit für die Befestigung einer Drehtür geeignet ist. Selbstverständlich ist es denkbar, daß der Holm auch an seinem zweiten Ende durch eine drehbare Lagerung unterstützt wird.

Der Träger 2 weist zwei sich gegenüberliegende Taschen 7, 8 auf, die durch eine Durchgangsbohrung 9 verbunden sind, wobei die Durchgangsbohrung 9 einen Durchmesser 10 besitzt. Die Tasche 7 wird seitlich durch eine Taschenwand 12 begrenzt und vom Außenrohr 4 überdeckt, dem ein Taschenboden 11 gegenüberliegt. Die Tasche 8 weist ebenfalls einen Taschenboden 13 und eine Taschenwand 14 auf. In dem dem Taschenboden 13 der Tasche 8 gegenüberliegenden Bereich besitzt das Außenrohr 4 eine Ausnehmung 15.

Auf der der Tasche 8 zugewandten Seite des Trägers 2 liegt eine Platte 16. Die Platte 16 besitzt eine Außenseite 17, die dem Träger 2 gegenüberliegt, und eine Innenseite 18, die einem nicht näher dargestellten Naßbereich 18a zugewandt ist. Weiterhin ist die Platte 16 auf der Höhe der die Stange 3 durchgreifenden Durchgangsbohrung 9 mit einer konusförmigen Durchgangsbohrung 19 versehen. In der konusförmigen Durchgangsbohrung ist ein kegelstumpfförmiges Beschlagselement 20 aufgenommen, das auf der einen Seite eine Gewindebohrung 21 und auf der anderen Seite Bohrungen 22 für einen Sternlochschlüssel zeigt. Statt der dargestellten Bohrungen 22 für einen Stirnlochschlüssel ist natürlich auch eine Sechskantausnehmung für einen Steckschlüssel im Beschlagselement 20 denkbar. Zwischen dem Beschlagselement 20 und der konusförmigen Durchgangsbohrung 19 in der Platte 16 liegt ein kegelmantelförmiger Polyamidring 23.

Zur Verbindung der Platte 16 bzw. des Beschlagselements 20 mit dem Träger 2 bzw. der Stange 3 ist ein Verbindungsmittel 24 vorgesehen. Das Verbindungsmittel 24 besitzt ein Mittelteil mit einem Durchmesser 25, ein Ende 26 mit einem Gewinde 27 und ein anderes Ende 28 mit einem anderen Gewinde 29.

Zwischen der Platte 16 und dem Träger 2 ist eine Distanzhülse 31 angeordnet. Die Distanzhülse 31 setzt sich aus einem Halsbereich 32 mit einer Kontaktfläche 34 und aus einem Fußbereich 33 mit einer Bodenfläche 35 zusammen. Außerdem wird die Distanzhülse 31 von einer Durchgangsbohrung 36 mit einem Durchmesser 37 durchsetzt. Im Fußbereich 33 der Distanzhülse 31 liegt auf der Bodenfläche 35 eine ringförmige Dichtung 38 auf.

In der Tasche 7 der Stange 3 liegt ein Gegenstück 39. Der Raum zwischen dem Gegenstück 39 und der Taschenwand 12 der Tasche 7 wird durch einen Körper 40, der aus einem elastischen Material besteht, ausgefüllt.

Bei einem nicht dargestellten Ausführungsbeispiel kann das Verbindungsmittel 24 mit nur einem endseitigen Gewinde ausgeführt sein, wobei das andere Ende dann mit einer Aufnahme bzw. einer Nase einer Rast- oder Bajonettverbindung versehen ist. Das jeweilige Gegenstück zur Rast- oder Bajonettverbindung ist bei diesem Ausführungsbeispiel dann entweder im Gegenstück 19 oder im Beschlagselement 20 ausgebildet. Wenn das jeweilige Gegenstück zur Rast- oder Bajonettverbindung im Gegenstück 19 ausgebildet ist, dann ist es auch denkbar, daß das Gegenstück 19 ohne Verdrehsicherung auskommt, wenn das Verbindungsmittel 24 in seinem Mittelteil 30 mit einem quadratischen Querschnitt ausgeführt ist und wenn die Durchgangsbohrung 9 ebenfalls einen quadratischen Querschnitt aufweist, wobei die Diagonale des Mittelteils 30 größer ist als die Kantenlänge des quadratischen Querschnitts der Durchgangsbohrung 9. In diesem Fall ist es gewährleistet, daß sich das Verbindungsmittel 24 nicht vollständig in der Durchgangsbohrung 9 drehen kann.

Bei der Montage wird zunächst der Träger 2 in der Aufnahme 6 befestigt. Wie oben erwähnt, sind selbstverständlich auch mehrere Aufnahmen für den Träger 2 vorstellbar. Danach wird das Verbindungsmittel 24 durch die Tasche 8 und die Durchgangsbohrung 9 in die Stange 3 eingeführt und in das Gegenstück 39, das in der Tasche 7 gelagert ist, verschraubt. Um das Verbindungsmittel 24 in das Gegenstück 39 zu verschrauben, ist kein aufwendiges Suchen mit dem Gewinde 27 des Verbindungsmittels 24 nach dem Gegenstück 39 erforderlich, da das Gegenstück 39 in der Tasche 7 durch den Körper 40 zentriert wird. Im nächsten Schritt wird die Distanzhülse 31 mit ihrem Halsbereich 32 durch die Ausnehmung 15 im Außenrohr 4 in die Tasche 8 der Stange 3 eingeführt, bis sie mit ihrer Kontaktfläche 34 auf dem Taschenboden 13 der Tasche 8 aufliegt. Bei dieser Einführbewegung tritt das Verbindungsmittel 24 mit seinem Ende 28 durch die Durchgangsbohrung 36 der Distanzhülse 31.

In einem weiteren Schritt wird nun die Platte 16 zusammen mit dem Beschlagselement 20 und dem Polyamidring 23 so auf die Bodenfläche 35 bzw. die Dichtung 38 der Distanzhülse 31 aufgesetzt, daß die Gewindebohrung 21 des Beschlagselements 20, das Gewinde 29 des Verbindungsmittels 24 greifen kann. Nun kann das Beschlagselement mit Hilfe eines Stirnlochschlüssels, der in die Bohrungen 22 des Beschlagselements 20 eingreift, festgedreht werden. Durch das Festdrehen wird die Platte 16 über das Beschlagselement 20 und das Verbindungsmittel 24 mit dem Gegenstück 39 verspannt, so daß eine Bewegung der Platte 16 relativ zum Träger 2 nicht mehr möglich ist. Natürlich ist es auch möglich, daß zunächst das Beschlagselement 20 mit dem Verbindungsmittel 24 verschraubt wird, um dann als Einheit durch die Platte 16, die Distanzhülse 31 und die Stange 3 mit dem Gegenstück 39 verschraubt zu werden.

Ist nun ein nachträgliches Verschieben der Platte 16 relativ zum Träger 2 erforderlich, um z. B. Einbautoleranzen auszugleichen, dann ist es möglich, das Beschlagselement 20 leicht zu lösen, um die Einheit Gegenstück 39, Verbindungsmittel 24, Beschlagselement 20, Polyamidring 23 und Platte 16 relativ zum Träger 2 und zur Distanzhülse 31 zu verschieben. Diese Verschiebung ist möglich, da der Durchmesser 25 des Verbindungsmittels 24 kleiner ist, als der Durchmesser 10 der Durchgangsbohrung 9 in der Stange 3 und der Durchmesser 37 in der Durchgangsbohrung 36 der Distanzhülse 31. Wenn ein Körper 40 aus Gummi zum Einsatz kommt, der den Raum zwischen dem Gegenstück 39 und der Taschenwand 12 ausfüllt, dann wird dieser bei einer Verschiebung der Platte 16 relativ zum Träger 2 von dem Gegenstück 39 in einem Teilbereich zusammengedrückt, um die Verschiebebewegung nicht zu behindern.

Es ist auch eine Variante denkbar, bei der die Distanzhülse 31 nicht erforderlich ist, da die Platte 16 direkt gegen das Außenrohr 4 verschraubt wird. Hierdurch ergibt sich für die Platte 16 eine großflächige und damit schonende Auflage.

Als Variante zur Bauteilgruppe Verbindungsmittel 24 und Beschlagselement 20 ist der Einsatz einer senkkopfförmigen Schraube denkbar, deren Kopf in seinen Abmessungen dem Beschlagselement 20 entspricht. Eine weitere Variante zu der genannten Baugruppe wäre der Einsatz eines Beschlagselements 20, das von einer Normschraube durchgriffen wird. Die beiden Varianten können als besonders montagefreundlich angesehen werden.

Die Darstellung gemäß Fig. 2 zeigt einen Schnitt durch die Vorrichtung 1. Es ist deutlich zu erkennen, daß der Durchmesser 10 der Durchgangsbohrung 9 in der Stange 3 größer ist als der Durchmesser 25 des Verbindungsmittels 24. In Abweichung zu Fig. 1 ist das Gegenstück 39 in Fig. 2 ohne den es umgebenden Körper 40 aus Gummi dargestellt. Der Körper 40 kann weggelassen werden, ohne daß sich große funktionelle Nachteile ergeben, wenn der Durchmesser 25 nicht wesentlich kleiner als der Durchmesser 10 ausgeführt ist und das Gegenstück 39 in der Tasche 7 ein Spiel aufweist, das dem Spiel des Verbindungsmittels 24 in der Durchgangsbohrung 9 entspricht.

Sollte für die Platte 16 nur eine Verschiebung in vertikaler Richtung erforderlich sein, beispielsweise weil aufgrund der Konstruktion des Trägers ein Verschieben der Platte 16 in horizontaler Richtung sicher nicht erforderlich ist, dann ist es denkbar, die Durchgangsbohrung 9 in der Stange 3 und die Durchgangsbohrung 36 in der Distanzhülse 31 mit einem langlochförmigen Querschnitt auszuführen, der nur eine vertikale Bewegung des Verbindungsmittels 24 erlaubt.

Fig. 3 zeigt eine rechteckförmige Ausnehmung 15 für den Einsatz der Distanzhülse 31, die die Distanzhülse 31 unverschiebbar und unverdrehbar im Träger 2 hält, wenn die Distanzhülse 31 im Halsbereich 32 ebenfalls rechteckförmig ausgestaltet ist. Hiermit wird ein Mitdrehen der Distanzhülse 31 beim Anziehen des Beschlagselements 20 wirksam verhindert.

Als Ausführungsvariante zur Vorrichtung 1 wäre es ebenfalls denkbar, das Beschlagselement 20 mit einer Durchgangsbohrung zu versehen, die exzentrisch zu seiner Mittellinie liegt. Durch diese exzentrische Bohrung wird (wie oben bereits vorgeschlagen) eine Normschraube als Verbindungsmittel 24 geführt und in das Gegenstück 39 verschraubt.

Zur Verstellung der Platte 16 gegenüber dem Träger 2 wird die Verbindung zwischen dem Verbindungsmittel 24 und dem Gegenstück 39 beispielsweise mit einem Innensechskantschlüssel leicht gelöst, um das Beschlagselement um das Verbindungsmittel 24 und relativ zur Platte 16 dann mit Hilfe eines Sternlochschlüssels verdrehen zu können.

Bei dieser Variante ist die Durchgangsbohrung ohne zusätzliches Übermaß für das Verbindungsmittel 24 gestaltet. Ein Heben und Senken bzw. Seitwärtsverstellen der Platte 16 erfolgt allein durch das Verdrehen des Beschlagselements 20 um das Verbindungselement 24 gegenüber der Platte 16.

### Bezugszeichenliste:

- 1: Vorrichtung zur verstellbaren
Befestigung von festen oder
beweglichen Platten
- 2: Träger
- 3: Stange
- 4: Außenrohr
- 5: Nase
- 6: Aufnahme
- 7: Tasche
- 8: Tasche
- 9: Durchgangsbohrung
- 10: Durchmesser
- 11: Taschenboden
- 12: Taschenwand
- 13: Taschenboden
- 14: Taschenwand
- 15: Ausnehmung
- 16: Platte
- 17: Außenseite
- 18: Innenseite
- 18a: Naßbereich
- 19: konusförmige Durchgangsbohrung
- 20: Beschlagselement
- 21: Gewindebohrung
- 22: Bohrung
- 23: Polyamidring
- 24: Verbindungsmittel
- 25: Durchmesser
- 26: Ende
- 27: Gewinde
- 28: Ende
- 29: Gewinde
- 30: Mittelteil
- 31: Distanzhülse
- 32: Halsbereich
- 33: Fußbereich
- 34: Kontaktfläche
- 35: Bodenfläche
- 36: Durchgangsbohrung
- 37: Durchmesser
- 38: Dichtung
- 39: Gegenstück
- 40: Körper aus Gummi

## Patentansprüche

1. Bausatz umfassend einen Träger (2), eine Platte (16) und eine Vorrichtung (1) zur verstellbaren Befestigung von festen oder beweglichen Platten (16), insbesondere für Naßzellen oder dergleichen, mit wenigstens einem an der Platte (16) unverschiebbar gelagerten Beschlagselement (20) zur Lagerung der Platte (16) an dem Träger (2), **dadurch gekennzeichnet, daß** ein das Beschlagselement (20) mit einem Gegenstück (39) verbindendes Verbindungsmittel (24) den Träger (2) mit Spiel durchgreift, wobei das Gegenstück (39) verschieblich gelagert ist, wobei das Verbindungsmittel (24) mindestens ein endseitiges Gewinde besitzt und wobei das Gegenstück (39) oder das Verbindungsmittel (24) verdrehgesichert ist.

2. Bausatz nach Anspruch 1, **dadurch gekennzeichnet, daß** das Beschlagselement (20) auf der dem Träger (2) abgewandten Seite der Platte (16) im Wesentlichen bündig in einer Ebene mit der Oberfläche der Platte (16) abschließt.

3. Bausatz nach einem der vorgenannten Ansprüche, **dadurch gekennzeichnet, daß** das Verbindungsmittel (24) eine Distanzhülse (31) durchgreift, die zwischen dem Beschlagselement (20) und dem Träger (2) liegt.

4. Bausatz nach einem der vorgenannten Ansprüche, **dadurch gekennzeichnet, daß** der Träger (2) aus einer Stange (3) und einem die Stange (3) ummantelnden Außenrohr (4) besteht.

5. Bausatz nach einem der vorgenannten Ansprüche, **dadurch gekennzeichnet, daß** das Beschlagselement (20) und das Verbindungsmittel (24) einteilig ausgeführt sind.

6. Bausatz nach einem der vorgenannten Ansprüche 1 bis 4, **dadurch gekennzeichnet, daß** das Beschlagselement (20) vom Verbindungsmittel (24) durchsetzt wird.

7. Bausatz nach einem der vorgenannten Ansprüche 4 bis 6, **dadurch gekennzeichnet, daß** das Beschlagselement (20) auf seiner der Stange (3) abgewandten Seite Eingriffsmittel (22) für Drehwerkzeuge aufweist.

8. Bausatz nach einem der vorgenannten Ansprüche, **dadurch gekennzeichnet, daß** das Beschlagselement (20) als Konuskopf ausgebildet ist, dem gegebenenfalls ein Polyamidring (23) zugeordnet ist.

9. Bausatz nach einem der vorgenannten Ansprüche 4 bis 8, **dadurch gekennzeichnet, daß** das Gegenstück (39) durch einen ringförmigen Körper (40) aus einem elastischen Material in einer Tasche (7) der Stange (3) zentriert ist.

10. Bausatz nach einem der vorgenannten Ansprüche 4 bis 9, **dadurch gekennzeichnet, daß** eine die Stange (3) durchsetzende Durchgangsbohrung (9) und/oder die Tasche (7) für das Gegenstück (39) im Querschnitt langlochförmig ist.

11. Bausatz nach einem der vorgenannten Ansprüche 4 bis 10, **dadurch gekennzeichnet, daß** die Distanzhülse (31) unverschiebbar und unverdrehbar in einer Ausnehmung (15) des Außenrohrs (4) gelagert ist.

12. Bausatz nach einem der vorgenannten Ansprüche 4 bis 11, **dadurch gekennzeichnet, daß** die Distanzhülse (31) in der Stange (3) gelagert ist.

## Claims

1. Construction kit comprising a carrier (2), a plate (16) and a device (1) for adjustably fastening stationary or movable plates (16), in particular for bathroom units or the like, comprising at least one mounting element (20) non-displaceably mounted on the plate (16) for mounting the plate (16) on the carrier (2), **characterised in that** a connecting means (24) connecting the mounting element (20) to a counter part (39) penetrates the carrier (2) with clearance, the counter part (39) being displaceably mounted, the connecting means (24) having at least one terminal thread and the counter part (39) or the connecting means (24) being secured against rotation.

2. Construction kit according to claim 1, **characterised in that**, on the side of the plate (16) remote from the carrier (2), the mounting element (20) ends substantially flush in a plane with the surface of the plate (16).

3. Construction kit according to any of the preceding claims, **characterised in that** the connecting means (24) penetrate a spacer sleeve (31) located between the mounting element (20) and the carrier (2).

4. Construction kit according to any of the preceding claims, **characterised in that** the carrier (2) consists of a rod (3) and an outer tube (4) encasing the rod (3).

5. Construction kit according to any of the preceding claims, **characterised in that** the mounting element (20) and the connecting means (24) are designed as one piece.

6. Construction kit according to any of the preceding claims 1 to 4, **characterised in that** the mounting element (20) is penetrated by the connecting means (24).

7. Construction kit according to any of the preceding claims 4 to 6, **characterised in that** the mounting element (20) has engagement means (22) for turning tools at its side remote from the rod (3).

8. Construction kit according to any of the preceding claims, **characterised in that** the mounting element (20) is constructed as a conical head with which a polyamide ring (23) is optionally associated.

9. Construction kit according to any of the preceding claims 4 to 8, **characterised in that** the counter part (39) is centred in a pocket (7) of the rod (3) by an annular body (40) made of elastic material.

10. Construction kit according to any of the preceding claims 4 to 9, **characterised in that** a through-aperture (9) penetrating the rod (3) and/or the pocket (7) is slot-shaped in cross-section for the counter part (39).

11. Construction kit according to any of the preceding claims 4 to 10, **characterised in that** the spacer sleeve (31) is mounted non-displaceably and non-rotatably in the recess (15) of the outer tube (4).

12. Construction kit according to any of the preceding claims 4 to 11, **characterised in that** the spacer sleeve (31) is mounted in the rod (3).

## Revendications

1. Ensemble de pièces comportant un support (2), une plaque (16) et un dispositif (1) pour la fixation réglable de plaques fixes ou mobiles (16), en particulier pour blocs-bains ou analogues, avec au moins un élément de prise (20) monté de façon à ne pas pouvoir se déplacer sur la plaque (16) et destiné au montage de la plaque (16) sur le support (2),
**caractérisé en ce qu'**un moyen de liaison (24), reliant l'élément de prise (20) à une contre-pièce (39), traverse avec jeu le support (2), la contre-pièce (39) étant montée déplaçable, le moyen de liaison (24) comportant au moins un filetage d'extrémité et la contre-pièce (39) ou le moyen de liaison (24) étant protégés contre la torsion.

2. Ensemble de pièces selon la revendication 1,
**caractérisé en ce que** l'élément de prise (20) obture la plaque du côté de celle-ci opposé au support (2) en affleurant au moins sensiblement la surface de ladite plaque (16).

3. Ensemble de pièces selon l'une des revendications précédentes,
**caractérisé en ce que** le moyen de liaison (24) traverse une douille d'écartement (31 ), disposée entre l'élément de prise (20) et le support (2).

4. Ensemble de pièces selon l'une des revendications précédentes,
**caractérisé en ce que** le support (2) comporte une barre (3) et un manchon externe (4) entourant la barre (3).

5. Ensemble de pièces selon l'une des revendications précédentes,
**caractérisé en ce que** l'élément de prise (20) et le moyen de liaison (24) forment une seule pièce.

6. Ensemble de pièces selon l'une des revendications 1 à 4,
**caractérisé en ce que** l'élément de prise (20) est pénétré par le moyen de liaison (24).

7. Ensemble de pièces selon l'une des revendications 4 à 6,
**caractérisé en ce que** l'élément de prise (20) présente des moyens de saisie (22) pour des outils de rotation, sur son côté opposé à la barre (3).

8. Ensemble de pièces selon l'une des revendications précédentes,
**caractérisé en ce que** l'élément de prise (20) est conformé en tête conique, à laquelle est éventuellement associée une rondelle de polyamide (23).

9. Ensemble de pièces selon l'une des revendications 4 à 6,
**caractérisé en ce que** la contre-pièce (39) est centrée par un corps annulaire (40) de matière élastique, disposé dans un évidement (7) de la barre (3).

10. Ensemble de pièces selon l'une des revendications 4 à 9,
**caractérisé en ce qu'**un passage (9) traversant la barre (3) et/ou l'évidement (7) pour la contre-pièce (39) présente une section oblongue.

11. Ensemble de pièces selon l'une des revendications 4 à 10,
**caractérisé en ce que** la douille d'écartement (31) est montée sans pouvoir se déplacer ni subir de torsion dans un évidement (15) du manchon externe (4).

12. Ensemble de pièces selon l'une des revendications 4 à 11,
**caractérisé en ce que** la douille d'écartement (31) est logée dans la barre (3).
